# EUROPÄISCHE PATENTSCHRIFT

(11) **EP 1 654 048 B1**
(45) Veröffentlichungstag und Bekanntmachung des Hinweises auf die Patenterteilung: **08.10.2008**
(21) Anmeldenummer: 04763751.7
(22) Anmeldetag: 03.08.2004
(51) Int. Cl.: B01D 25/12, B01D 25/21

(54) **HEIZELEMENT FÜR EINE FILTERPRESSE**
HEATING ELEMENT FOR A FILTER PRESS
ELEMENT DE CHAUFFAGE DESTINE A UN FILTRE-PRESSE

(30) Priorität: 14.08.2003 DE 10337498
(43) Veröffentlichungstag der Anmeldung: 10.05.2006
(73) Patentinhaber: Klinkau GmbH + Co., 87616 Marktoberdorf (Leuterschach) (DE)
(72) Erfinder: KUFFEL, Lothar, 87616 Marktoberdorf (DE); ZELLER, Johann, 87647 Oberthingau (DE); BUHL, Rolf, Friedrich, 50739 Köln (DE)
(74) Vertreter: Appelt, Christian W.
(86) Internationale Anmeldenummer: PCT/EP2004/008693
(87) Internationale Veröffentlichungsnummer: WO 2005/016487

(56) Entgegenhaltungen:
- EP-A- 0 676 225
- DE-A- 19 843 028
- GB-A- 346 191

## Beschreibung

Die vorliegende Erfindung betrifft ein Heizelement für eine Filterpresse, das mit einem fluiden Heizmedium beschickbar ist und das mindestens eine Heizplatte aus einem wärmeleitenden Material umfaßt.

Filterpressen sind in mannigfaltigen Ausführungsformen bekannt, in der Regel werden mehrere Membranfilterplatten in einer Filterpresse zusammengespannt, so daß zwischen einzelnen Membranfilterplatten eine Filterkammer entsteht. Üblicherweise wird über einen Einlauf- und/oder Auslaufbereich eine Suspension in die Filterkammer gedrückt. Die Suspension wird dann üblicherweise durch ein auf der Membran aufliegendes Filtertuch gefiltert, wobei die Feststoffe durch das Filtertuch in der Filterkammer zurückgehalten werden, so daß ein sogenannter Filterkuchen entsteht. Das von den Festkörpern befreite Filtrat wird dabei aus dem System heraus geleitet. Die Membranen können beispielsweise mit einem Druckmittel beaufschlagt werden, so daß sie sich von einem Randbereich der Filterkammer in die Filterkammer und aufeinander zu erstrecken, so daß der Filterkuchen zusammengepreßt und damit Feuchtigkeit entzogen wird. Es soll an dieser Stelle darauf hingewiesen werden, daß Filterpressen in unterschiedlichen Ausführungsformen und mit unterschiedlichen Varianten herstellbar sind.

Ferner ist es bekannt, Filterpressen mit Heizelementen zu versehen, wobei die Heizelemente bevorzugt zwischen einzelnen Membranfilterplatten in der Filterpresse zusammengespannt werden, so daß üblicherweise abwechselnd Heizelemente und Membranfilterplatten vorhanden sind. Solche Heizelemente dienen insbesondere der thermischen Trocknung der herausgefilterten Festkörper bzw. des Filterkuchens.

Ein solches Heizelement für eine Filterpresse ist beispielsweise aus dem deutschen Gebrauchsmuster DE 200 06 891 U1 bekannt. Die in dieser Druckschrift offenbarten Heizelemente umfassen einen Grundkörper, der auf beiden Seiten jeweils mit einer metallischen Platte dichtend abgeschlossen ist, so daß sich verzweigende, parallele Heizmediumkanäle entstehen.

Problematisch bei solchen Heizelementen ist jedoch beispielsweise eine sichere Befestigung der Heizplatten an dem Grundkörper, die eine Abdichtung der Heizmediumkanäle während des Betriebs gewährleistet. Insbesondere liegen die Dichtelemente zwischen Heizplatte und Grundkörper innerhalb der mit Suspension beaufschlagten Filterkammer, wodurch eine ständige Beaufschlagung der Dichtelemente mit Schmutzpartikeln erfolgt, was sich in Verbindung mit den thermisch bedingten Relativverschiebungen im Randbereich stark Lebensdauer beeinträchtigend auf die Dichtelemente auswirkt. Ferner unterliegen die Befestigungen selbst, zum Beispiel Schrauben und Dehnhülsen zwischen den Heizplatten, einer ständigen thermischen Wechselbeanspruchung, was auf Dauer zu gegebenenfalls fehlerhaften Funktionen führt.

Aus der DE 198 43 028 A1 ist ferner eine Filterpresse bekannt, bei der Heizelemente vorgesehen sind, die ein- oder mehrteilig ausgebildet sein können.

Die EP 06 762 25 A1 offenbart eine Filterplatte aus Metall für eine Kammerfilterpresse mit zwei Platten, die einen Hohlraum umschließen, der mit einer Heizöffnung verbunden ist, wobei die Platten mittels Schweißnähten umlaufend mit einem zugehörigen Rahmen verbunden sind.

Aus der GB 346,191 ist ferner eine Filterpresse bekannt, bei der ein Heizelement in Form einer hohlen Platte innerhalb der Filterpresse eingesetzt wird.

Es ist eine Aufgabe der vorliegenden Erfindung, ein Heizelement für eine Filterpresse zur Verfügung zu stellen, das eine sichere Befestigung des Heizelements an einem Grundkörper zur Verfügung stellt, die zum einen einfach und kostengünstig herzustellen ist, zum anderen eine sichere Abdichtung während des Betriebs der Heizpresse ermöglicht und bessere Trocknungsergebnisse liefert.

Diese Aufgabe wird durch ein Heizelement gemäß Anspruch 1 gelöst, die Ansprüche 2 bis 15 betreffen besonders vorteilhafte Ausführungsformen eines erfindungsgemäßen Heizelements.

Erfindungsgemäß ist die mindestens eine Heizplatte ferner nur in einem zusammenhängenden Teilbereich an dem Grundkörper befestigt, wobei die Fläche des zusammenhängenden Teilbereichs kleiner ist als die verbleibende Fläche der Heizplatte außerhalb dieses zusammenhängenden Teilbereichs. Die mindestens eine Heizplatte ist daher in weiten Bereichen, zumindest auch an einer, mehreren oder sogar allen Außenbereichen der Ebene nicht mit dem Grundkörper verbunden. Im Gegensatz zu den Heizplatten gemäß dem Stand der Technik, die um ihren gesamten Umfang an dem Grundkörper befestigt sind, besteht daher für eine erfindungsgemäße Heizplatte die Möglichkeit, sich weitgehend unabhängig von dem Grundkörper insbesondere thermisch auszudehnen bzw. auf sonstige Kräfte oder Drücke zu reagieren, ohne Verspannungen zwischen Grundkörper und Heizplatte hervorzurufen.

Da insbesondere die Materialien für den Grundkörper einerseits und die Heizplatte andererseits in der Regel deutlich unterschiedliche Charakteristiken aufweisen, insbesondere aus Materialien mit deutlich unterschiedlichen Wärmeausdehnungskoeffizienten bestehen, werden die beim Stand der Technik vorhandenen Probleme, die sich beim bestimmungsgemäßen Gebrauch einer solchen Filterpresse in einem weiten Temperaturbereich, in der Regel zwischen 20° C und 150° C, ergeben, nämlich Verspannungen zwischen den beiden miteinander verbundenen Materialien aufgrund der unterschiedlichen Wärmeausdehnung, vermieden, so daß Belastungen und Zerstörungen der Materialien, aber auch mögliche Fehlfunktionen, beispielsweise durch bei gegenseitigen Verspannungen oder nachlassender Verspannung der Befestigungselemente auftretende Undichtigkeiten, effektiv und auf einfache Weise vermieden.

Bei dem erfindungsgemäßen Heizelement können sich daher die Heizplatte einerseits und der Grundkörper andererseits in weiten Bereichen unabhängig voneinander ausdehnen, wobei durchaus auch Relativverschiebungen der Elemente zueinander auftreten, wobei jedoch die Dichtigkeit des Heizelements und insbesondere der Heizmediumkanäle durch eine feste Anlage der Heizplatte an dem Grundkörper sichergestellt ist, was während des Betriebs insbesondere durch das Zusammenpressen der Filterpresse sichergestellt ist Insbesondere werden dadurch Schraubverbindungen in Zonen dieser unvermeidlichen thermisch bedingten Relativverschiebungen zwischen Heizplatte und Grundkörper vermieden.

Es soll an dieser Stelle darauf hingewiesen werden, daß bei den üblichen Materialien und in den relevanten Temperaturbereichen Wärmeausdehnungsunterschiede bei der Heizplatte einerseits und dem Grundkörper andererseits auftreten, die bis in den Bereich von 2-3% der Länge des Gesamtmaterials gehen, so daß bei üblichen Heizelementen mit einer Seitenlänge von ca. 1500 mm Ausdehnungsunterschiede von bis zu 45 mm ausgeglichen werden müssen, was entweder starre Befestigungen belastet bzw. zerstört, oder dazu führt, daß sich eine Platte zwischen zwei Befestigungselemente aufgrund der auftretenden Spannungen aufwölbt, was zu Undichtigkeiten führen kann, oder im Falle von Befestigungselementen, die schwimmend gelagert sind, beispielsweise Schrauben, die sich in Langlöcher bewegen, die um den Umfang des Grundkörpers herum verteilt sind und die thermischer Wechselbeanspruchung ausgesetzt sind, auf die Dauer zu einem Lösen des Befestigungselements und damit auch zu Undichtigkeiten führen kann, wobei darüber hinaus auch Funktionsstörungen auftreten können, wenn beispielsweise die Bewegung der Befestigungselemente in den Langlöchern oder eine sonstige schwimmende Lagerung nicht zuverlässig funktionieren.

Bei einer besonders bevorzugten Ausführungsform weist der zusammenhängende Teilbereich eine Ausdehnung auf, die zumindest in einer von zwei die Ebene aufspannende, senkrecht zueinander stehende Richtungen 50 % der maximalen Ausdehnung der Heizplatte in dieser Richtung nicht überschreitet.

Besonders bevorzugt erstreckt sich der zusammenhängende Teilbereich, an dem die Heizplatte an der Grundplatte befestigt ist, zumindest in einer linearen Richtung der Ebene, über die sich die Heizplatte erstreckt, über maximal 50% der Abmessung der Ebene in dieser Richtung. Es ist jedoch auch möglich, daß sich die Befestigungen in einer Richtung im wesentlichen über die gesamte Ausdehnung der Heizplatte bzw, des Grundkörpers erstreckt, jedoch in einer zweiten Richtung, die zumindest eine Komponente senkrecht zur ersten Richtung aufweist, sich nur über einen beschränkten Teilbereich erstreckt. Bevorzugt erstreckt sich der Bereich, in dem die Heizplatte an der Grundplatte befestigt ist, in zwei zueinander senkrechten Richtungen, die die Ebene aufspannen, über maximal 50% oder 40% der Abmessung der Heizplatte oder des Grundkörpers in der jeweiligen Richtung, wobei besonders bevorzugt dieser Bereich 30% der Abmessungen oder sogar 20% der Abmessungen in dieser oder in beiden Richtung nicht überschreitet.

Insbesondere erstreckt sich der zusammenhängende Teilbereich, an dem die Heizplatte an der Grundplatte befestigt ist, jedoch zumindest über eine Fläche, die der Flächenausdehnung eines Suspensionszulaufs oder eines Stütznockens entspricht.

Unter "Befestigung" im Sinne dieser Erfindung ist eine Vorrichtung zu verstehen, die an ihrer Position eine Relativbewegung zwischen der mindestens einen Heizplatte und dem Grundkörper insbesondere in Richtungen parallel zur aufgespannten Ebene verhindert.

Durch das erfindungsgemäße Heizelement wird sichergestellt, daß eine Ausdehnung der Heizplatte einerseits und des Grundkörpers andererseits unabhängig voneinander über einen weiten Teilbereich ermöglicht wird. Je kleiner die Bereiche gewählt sind, in denen eine Befestigung der Grundplatte vorliegt, um so größer sind die Freiheitsgrade der unabhängigen Ausdehnungen der einzelnen Elemente.

Bei einer besonders bevorzugten Ausführungsform weist das Heizelement eine Zentralbohrung auf, wobei sowohl die Heizplatte als auch des Grundkörpers mit einem solchen Zentralbohrung versehen sind. Bei dieser bevorzugten Ausführungsform ist die Heizplatte bevorzugt in einem Bereich um dieses Zentralbohrung herum an dem Grundkörper befestigt, während im Außenbereich die Heizplatte nicht fest mit dem Grundkörper verbunden ist, so daß eine Ausdehnung der Heizplatte im Bereich außerhalb der Zentralbohrung und damit im wesentlichen über die gesamte Oberfläche der Heizplatte unabhängig von dem Grundkörper möglich ist.

Die Heizplatte kann auf unterschiedliche Weisen an dem Grundkörper befestigt werden, beispielsweise mittels Schraubenbefestigungen, möglicherweise aber auch durch einen Art Bajonettverschluß oder aber auch durch ein Flanschelement, welches die Platte im Bereich der Zentralbohrung fest mit der Grundplatte verbindet.

Bei einer solchen Ausführungsform wird insbesondere erreicht, daß in den Randbereichen des Grundkörpers keine Befestigungsvorrichtungen, beispielsweise Langlöcher etc., vorgesehen sein müssen, was dazu führt, daß Strukturen und Heizkanäle, die in dem Grundkörper, gegebenenfalls in Zusammenwirkung mit der jeweiligen Heizplatte, gebildet werden, und die Dichtelemente, welche den Heizraum zum Dichtrand begrenzen, bis weiter in die Randbereiche ausgebildet werden können. Dadurch wird eine größere Fläche für das Heizmedium zur Verfügung gestellt, der Filterkuchen kann daher auch in den Randbereichen zuverlässig aufgeheizt und dadurch getrocknet werden, was bei Vorrichtungen gemäß dem Stand der Technik, in denen, wie erwähnt, Langlöcher im Randbereich vorhanden sind, nicht gewährleistet ist.

Bei einer Ausführungsform liegt die Heizplatte neben dieser zentralen Befestigung auf der Grundplatte lediglich lose auf wobei die Dichtigkeit der Heizmediumkanäle, die durch die Grundplatte und/oder die Heizplatte im Inneren des Heizelements gebildet werden, durch den während des Betriebs auf das Heizelement ausgeübten Druck der Filterpresse realisiert werden.

Es ist möglich, daß die Heizplatte und der Grundkörper in den Bereichen, in denen sie nicht miteinander verbunden sind, so ausgebildet sind, daß sie direkt gegeneinander abdichten, es ist jedoch auch möglich, zusätzliche Dichtelemente vorzusehen, die ein Abdichten der Heizplatte gegen die Grundplatte insbesondere im Bereich der Heizmediumkanäle verstärken oder ermöglichen. Selbstverständlich ist es auch möglich, im Bereich der Befestigung der Heizplatte an dem Grundkörper eine direkte Dichtung der beiden Materialien gegeneinander vorzusehen, oder aber zusätzlich Dichtungen vorzusehen.

Bei einer anderen Ausführungsform weist das Heizelement einen Bohrung in einem Eckbereich auf, wobei die Heizplatte lediglich im Bereich dieser Bohrung, analog zu den obigen Erläuterungen, an dem Grundkörper befestigt ist. Die Vorteile sind vergleichbar mit denen bei einem Zentralbohrung, lediglich die Positionierung der Durchführung bzw. Bohrung ist unterschiedlich.

Bei einer weiteren möglichen Ausführungsform ist es auch möglich; das Heizelement im wesentlichen über die Erstreckung eines Seitenbereichs mit dem Grundkörper zu verbinden, wobei es zwar grundsätzlich möglich ist, die Verbindung über die gesamte Ausdehnung der Seitenbereichs zu führen, es jedoch bevorzugt ist, eine Verbindung nur über einen geringeren Bereich, bevorzugt weniger als 50% oder, wie oben erwähnt, bevorzugt maximal 30% oder gar 20% der Längsausdehnung vorzusehen. Bevorzugt ist insbesondere die Verbindung nur über einen Bereich vorgesehen, der eine Fläche aufweist, die geringer ist als die Fläche des Bereichs der Heizplatte, an dem keine Befestigungen vorgesehen sind.

Insbesondere bei einer Befestigung im Randbereich aber auch bei Befestigungen in der Nähe von Durchführungen, beispielsweise bei der Zentralbohrung, können Befestigungen auch mittels Klammem oder Klemmen vorgesehen sein, die eine feste Anlage und Verbindung der Heizplatte mit dem Grundkörper sicherstellen.

Bevorzugt besteht die Heizplatte aus einem Metall, insbesondere aus Aluminium, Edelstahl oder auch aus Titan oder aus wärmeleitendem Kunststoff oder einer Kombination solcher Materialien, während der Grundkörper bevorzugt aus einem Kunststoffmaterial besteht, insbesondere aus Polypropylen PP. Die aus Metall bestehende Heizplatte weist dabei eine besonders hohe Wärmeleitfähigkeit auf, was für den Heizeffekt von Bedeutung ist, während der aus Kunststoff bestehende Grundkörper besonders einfach und kostengünstig herzustellen ist. Es soll an dieser Stelle darauf hingewiesen werden, daß insbesondere bei der Wahl dieser Elemente die Wäremausdehnungskoeffizienten sehr unterschiedlich sind, so daß diese Erfindung beim Einsatz insbesondere dieser Materialien von besonderer Bedeutung ist.

Die Heizplatte kann sich bei einer Ausführungsform in Richtung ihrer Ebene im wesentlichen innerhalb der jeweiligen Abmessung des Grundkörpers erstrecken, es ist jedoch auch möglich, daß sich die Heizplatte in einer oder mehreren Richtungen über die seitliche Abmessung des Grundkörpers erstreckt. Auch ist es möglich, daß die seitlichen Abmessungen, bei einer bestimmten Temperatur, im wesentlichen miteinander fluchten, wobei erst während des bestimmungsgemäßen Gebrauchs und je nach Temperatur und aufgrund der unterschiedlichen Ausdehnungskoeffizienten die Heizplatte sich einmal über die seitlichen Abmessungen des Grundkörpers hinaus erstreckt, zum anderen aber möglicherweise innerhalb der seitlichen Abmessungen des Grundkörpers liegt.

Bei einer bevorzugten Ausführungsform umfaßt das Heizelement insgesamt zwei Heizplatten, die auf je einer Seite des Grundkörpers angeordnet sind. Es ist jedoch auch möglich, daß das Heizelement lediglich eine Heizplatte umfaßt, insbesondere wenn auf der anderen Seite keine Filterkammer vorhanden ist oder aber diese Filterkammer nicht geheizt werden soll.

Bei einer besonderen Ausführungsform überragen die zwei Heizplatten zumindest auf einer Seite den Grundkörper, wobei ferner mindestens ein Befestigungselement vorgesehen ist, welches die beiden Heizplatten in einer festgelegten relativen Position zueinander hält. Bei diesen Befestigungselementen kann es sich beispielsweise um Distanzstücke handeln, die die beiden Heizplatten miteinander verbinden. Aufgrund der gleichen oder zumindest sehr ähnlichen Wärmeausdehnungskoeffizienten der beiden Heizplatten treten hier, im Gegensatz zu einer Befestigung der Heizplatte mit dem Grundkörper, nicht die oben genannten Probleme auf. Aufgrund der im wesentlichen gleichmäßigen Ausdehnung bzw. aufgrund des vergleichbaren Wärmeausdehnungskoeffizienten und des vergleichbaren Wärmeverhaltens der beiden Heizplatten bewegt sich vielmehr das Befestigungselement zusammen mit den beiden Heizplatten bzw. den Bereichen der Heizplatte relativ zu dem Grundkörper.

Es soll an dieser Stelle darauf hingewiesen werden, daß bei einer Ausführungsform, bei der zwei Heizplatten vorhanden sind, diese bevorzugt aus identischem Material bestehen, es ist jedoch bei bestimmten Ausführungsformen auch möglich, unterschiedliche Materialien vorzusehen, wobei diese in der Regel zumindest ähnliche Wärmeausdehnungskoeffizienten aufweisen.

Gemäß einer weiteren Ausführungsform der Erfindung ist ein Heizelement für eine Filterpresse vorgesehen, das mit einem fluiden Heizmedium beschickbar ist, mit einem Grundkörper und zwei sich im wesentlichen über eine Ebene erstreckenden Heizplatten aus einem wärmeleitenden Material. Der Grundkörper ist bei diesem Heizelement zwischen den Heizplatten angeordnet, wobei die Heizplatten mittels Distanzstücken außerhalb der seitlichen Ausdehnung des Grundkörpers miteinander verbunden sind, wobei der gesamte Grundkörper zwischen den Heizplatten relativ zu den Heizplatten zumindest in einem Maße frei beweglich ist, daß eine unterschiedliche, thermisch bedingte Ausdehnung der Heizplatten einerseits und des Grundkörpers andererseits in der Ebene möglich ist. Durch diese Anordnung wird ein vergleichbares Ziel erreicht, nämlich eine Möglichkeit der relativen Bewegung der Heizplatten einerseits und des Grundkörpers andererseits.

Es soll an dieser Stelle darauf hingewiesen werden, daß die Distanzstücke bevorzugt zumindest eine solche Länge aufweisen, daß eine thermisch bedingte Ausdehnung des Grunkörpers insbesondere senkrecht zur Ebene nicht zu einer Verformung der Heizplatte führt. Selbst wenn jedoch durch die Ausdehnung des Grundkörpers und die Verbindung der Heizplatten die Heizplatten in ihrem Endbereich aufeinander zu gebogen werden, wird die Funktion der relativen Bewegung der Elemente nicht gestört, da keine Verklemmung stattfindet, wie es bei Elementen des Standes der Technik der Fall wäre, wodurch auch Undichtigkeiten vermieden werden.

Bei einer bevorzugten Ausführungsform besteht darüber hinaus in einem sehr begrenzten zusammenhängenden Teilbereich des Heizelementes eine Befestigung zwischen Grundkörper und beiden Heizplatten, einem Teilbereich, der beispielsweise der Flächenausdehnung eines Suspensionszulaufs oder eines Stütznockens in der Filterplatte entspricht oder zumindest kleiner als die Restfläche des frei verschieblichen Bereichs ist, wobei diese Stelle eine Fixpunkt zwischen Heizplatte und Grundkörper bildet und damit die Anordnung der in diesem Bereich notwendigen Funktions- und Dichtelemente auf engstem Bauraum erlaubt, ohne Freiräume für die Relativwege zwischen Heizplatte und Grundkörper zu benötigen. Bei dieser Ausführungsform ist es auch möglich, daß das Heizelement lediglich nur auf einer Seite eine Heizplatte umfaßt, wie oben erläutert.

Im Gegensatz zu den Heizelementen gemäß dem Stand der Technik, deren Heizplatten an ihren gesamten Umfang über Verbindungselemente, welche die Vorspannung der Dichtungen sicher stellen müssen, miteinander befestigt sind, besteht daher für ein erfindungsgemäßes Heizelement die Möglichkeit, auf all Befestigungselemente der Heizplatten am Umfang zu verzichten und die für die Abdichtung des Druckraumes erforderliche Vorspannung der Dichtung damit nicht durch eine Vielzahl von Schraubelementen an jedem Heizelement, sondern nur durch die von außen auf das Heizelement wirkende Schließkraft der Filterpresse, welche das gesamte Plattenpaket zusammenspannt, zu erzeugen, mit dem Vorteil einer erheblichen Steigerung der Funktionssicherheit der Dichtung, drastischer Reduzierung der Bauteile und des Montage- und Herstellaufwandes, sowie einer größeren nutzbaren Heizfläche, da die Dichtungen im Randbereich zwischen Heizplatte und Grundkörper weiter nach außen, bis an den äußersten Rand des Dichtrandes, versetzt werden können.

Außerdem ist im Gegensatz zum Stand der Technik, bei dem Heizplatten und Grundkörper im Bereich der Befestigungspunkte am Umfang genau abgestimmte Baumaße und Bautoleranzen zur Sicherstellung der notwendigen Bauteilfreiräume bei thermisch bedingter Ausdehnung aufweise müssen, bei der erfindungsgemäßen Lösung unter allen Gegebenheiten eine sichere Funktion des gesamten Heizelementes dadurch gegeben, daß Heizplatte und Grundkörper sich weitgehend unabhängig voneinander thermisch ausdehnen bzw. auf sonstige Kräfte oder Drücke reagieren können, ohne daß Befestigungselemente im Weg stehen, die die Verformung behindern können.

Insbesondere aufgrund der erfindungsgemäßen Ausgestaltung des Heizelementes, bei dem vor allem keine Spannungen, wie oben beschrieben, auftreten, ist es möglich, die Dicke der Heizplatte relativ gering auszulegen. Typische Dicken für Heizplatten bei Heizelementen gemäß der Erfindung liegen unter 4 mm, wobei bevorzugt eine Dicke von 1 bis 2 mm gewählt wird.

Auf der Innenseite können die Metallplatten bei einer bevorzugten Ausführungsform ebenfalls mit Strukturierungen, insbesondere auch mit Längsnuten, versehen werden, die, gegebenenfalls gemeinsam mit dem Grundkörper, Kanäle für die Verteilung des Heizmediums auf der Rückseite (bzw. Innenseite) der Heizplatte bilden, wodurch gegebenenfalls eine entsprechende Formgebung des Grundkörpers entfallen oder geringer ausfallen kann, was zu einer besonders einfachen und kostengünstigen Herstellung des Grundkörpers führt.

Diese und weitere Vorteile der Erfindung werden anhand der beigefügten Zeichnungen, die schematisch mehrere Ausführungsformen der Erfindung zeigen, deutlich.
Es zeigen:
- Figur 1: eine Teilquerschnittsdarstellung einer ersten Ausführungsform eines erfindungsgemäβen Heizelements mit einer Zentralbohrung;
- Figur 2: eine Draufsicht auf die in Figur 1 gezeigte Ausführungsform;
- Figur 3: eine Teilquerschnittsansicht einer zweiten Ausführungsform eines erfindungsgemäßen Heizelementes mit einer Zentralbohrung.

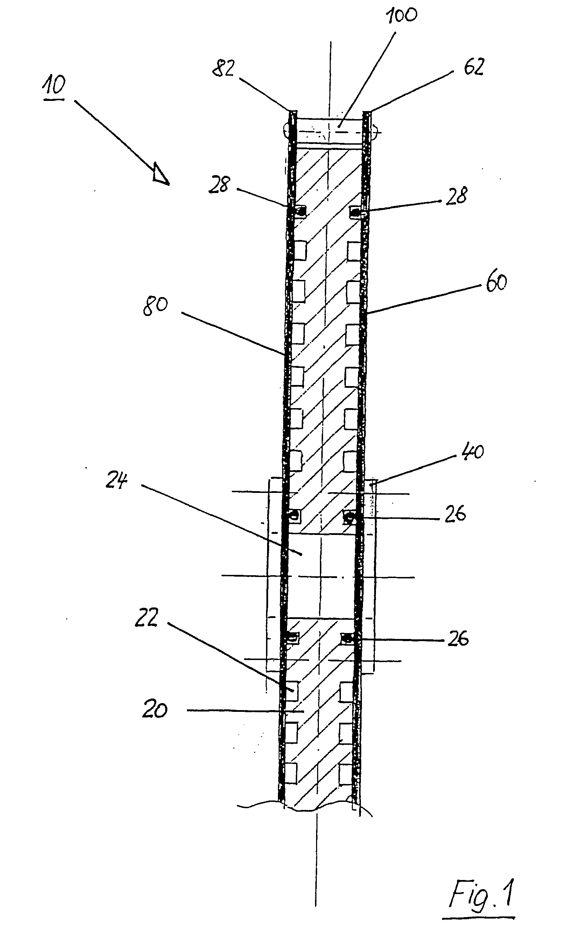

Figur 1 zeigt schematisch in einem Teilquerschnitt eine erste Augführungsform eines erfindungsgemäßen Heizelements 10. Das Heizelement 10 umfaßt einen Grundkörper 20, der auf beiden Oberseiten strukturiert ausgebildet ist und Kanäle 22 umfaßt, in denen ein fluides Heizmedium, insbesondere eine Heizflüssigkeit oder Dampf, durchgeleitet werden kann.

Auf beiden Seiten des Grundkörpers 20 ist jeweils eine Heizplatte 60 bzw. 80 vorgesehen, die im Bereich einer Zentralbohrung 24 mittels einer Befestigung 40 fest mit dem Grundkörper 20 verbunden sind. Die Zentralbohrung 24 erstreckt sich sowohl durch den Grundkörper 20 als auch durch die beiden Heizplatten 60 und 80. Die beiden Heizplatten 60, 80 sind bei dieser Ausführungsform nicht über die Zentralbohrung 24 miteinander verbunden, eine solche Verbindung kann jedoch bei einer anderen Ausführungsform vorgesehen sein.

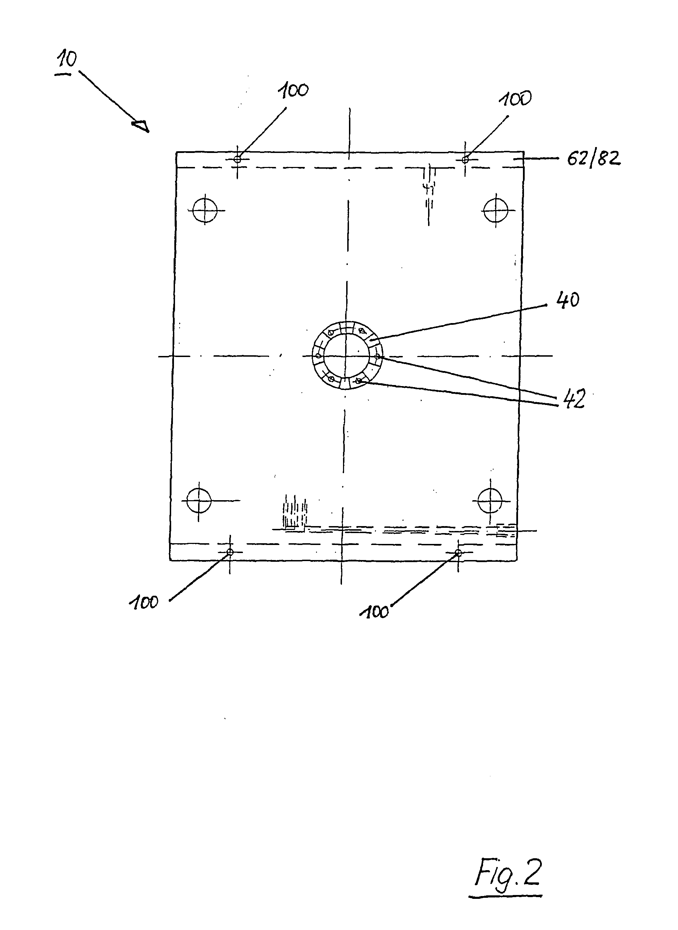

Bei der Befestigung 40 handelt es sich bei dieser Ausführungsform um einen zentralen Flansch, der mittels Schraubbefestigungen (nicht gezeigt) an der Grundplatte befestigt ist, (siehe auch Figur 2), wobei die Schraubbefestigungen durch Bohrungen in dem Grundkörper 20 geführt werden.

Die beiden Heizplatten 60 und 80 erstrecken sich an zwei Seiten (siehe auch Figur 2) über die seitlichen Abmessungen des Grundkörpers 20 hinaus, wobei die über den Grundkörper hinaus ragenden Bereiche die Bezugszeichen 62 und 82 tragen.

In diesen Bereichen 62 und 82 der Heizplatten 60, 80 ist jeweils an zwei Stellen (siehe auch Figur 2) ein Verbindungselement 100 vorgesehen, das die beiden Heizplatten 60, 80 miteinander verbindet. Dieses Verbindungselement umfaßt bei der hier gezeigten Ausführungsform ein Distanzstück.

Die Heizplatten 60 und 80 sind beide im wesentlichen eben ausgebildet, so daß sie auf der jeweiligen Oberseite des Grundkörpers 20 aufliegen, so daß sie Kanäle 22 für ein Heizmedium nach außen abschließen.

Neben den Kanälen 22 sind ferner Vertiefungen in dem Grundkörper 20 ausgebildet, die zur Aufnahme von Dichtungen 26, 28 dienen, mittels denen die Heizplatten 60, 80 gegenüber dem Grundkörper 20 abgedichtet werden, gleichwohl bereits eine Selbstdichtung der Kanäle 22 durch die direkte Auflage der Heizplatte 60 bzw. 80 auf dem Grundkörper 20 erreicht wird.

Wie aus Figur 1 ersichtlich wird, können sich die Heizplatten 60 und 80 einerseits und der Grundkörper 20 andererseits im wesentlichen unabhängig voneinander bewegen und ausdehnen, so daß beispielsweise bei einer stärkeren Ausdehnung der Heizplatten 60 und 80 diese die Möglichkeit haben, sich seitlich, gemeinsam mit dem Verbindungselement 100, weiter nach außen auszudehnen, so daß die Bereiche 62 und 82 der Heizplatten 60, 80 seitlich weiter über den Grundkörper 20 herausragen, so daß auch das Verbindungselement 100 mit einem größeren Abstand von dem Grundkörper 20 angeordnet ist, ohne daß Verspannungen auftreten, da eine Befestigung der Heizplatten 60, 80 nur im Bereich der Zentralbohrung 24 vorgesehen ist.

Figur 2 zeigt eine Draufsicht auf die in Figur 1 gezeigte Ausführungsform des Heizelements. Wie in Figur 2 deutlich ersichtlich ist, umfaßt das Heizelement 10 insgesamt 4 Verbindungselemente 100 auf zwei gegenüberliegenden Seiten in den Bereichen 62, 82 der Heizplatten 60, 80, die über die seitlichen Abmessungen des Grundkörpers hinausragen.

Wie ebenfalls deutlich in Figur 2 ersichtlich ist, umfaßt die Befestigung 40 im Bereich der Zentralbohrung insgesamt 6 Schraubenelemente 42, die durch zugehörige Bohrungen in den Grundkörper 20 geführt sind und mit denen die Heizplatten 60, 80 an dem Grundkörper 20 befestigt sind.

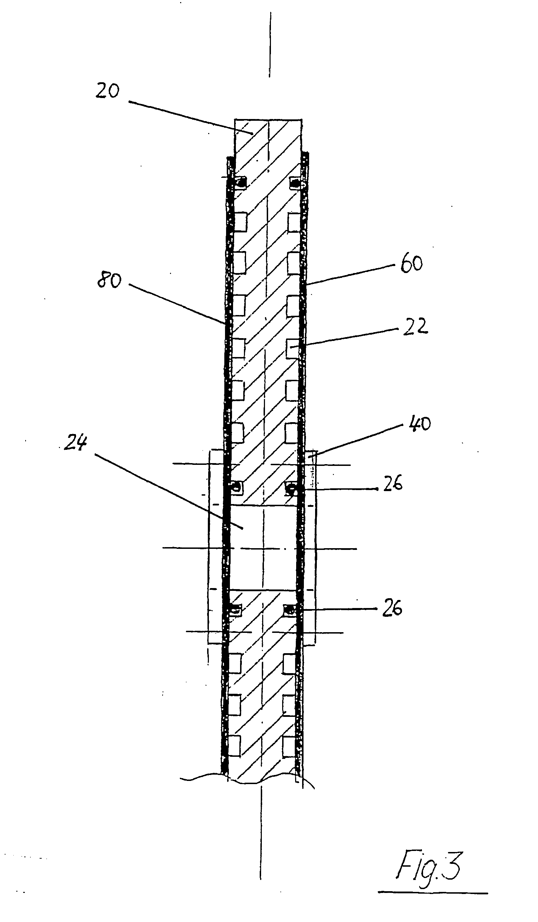

Figur 3 zeigt eine Teilquerschnittsansicht einer weiteren Ausführungsform eines erfindungsgemäßen Heizelements 10. Gleiche oder ähnliche Bauteile wurden mit identischen Bezugszeichen versehen, so daß insbesondere auf die Beschreibung zu den vorhergehenden Figuren verwiesen wird.

Im Gegensatz zu der in Figur 1 gezeigten Ausführungsform erstrecken sich die Heizplatten 60, 80 nicht über die seitlichen Abmessungen des Grundkörpers 20 hinaus, sondern enden vielmehr innerhalb der seitlichen Abmessungen des Grundkörpers 20.

Auch bei dieser Ausführungsform sind die Heizplatten 60, 80 mittels einer als Flansch ausgebildeten Befestigung 40 im Bereich einer Zentralbohrung 24 mit dem Grundkörper fest verbunden, während die Heizplatten 60, 80 in den sonstigen Bereichen lediglich lose auf dem Grundkörper aufliegen. Auch bei dieser Ausführungsform sind Dichtungen 26, 28 versehen, gleichwohl auch einen bereits vorhandene Direkt-Abdichtung aufgrund des Kontakts der Heizplatten 60, 80 mit dem Grundkörper 20 erzielt wird.

Bei allen gezeigten Ausführungsformen werden daher die Dichtungen im Randbereich zwischen den Heizplatten 60, 80 und dem Grundkörper 20 nicht durch Schrauben oder sonstige Befestigungen, welche die Heizplatten zumindest in eine Richtung an dem Grundkörper befestigen, erzeugt, sondern im wesentlichen durch die Schließkraft einer Presse, in der die gezeigten Ausführungsformen der Heizelemente 10 eingesetzt werden.

Der Grundkörper 20 der in Figur 1 gezeigten Ausführungsform besteht aus Polypropylen PP, während die Heizplatten 60, 80 Aluminiumplatten sind, die eine Stärke von ca. 1,5 mm aufweisen.

Bei der in Figur 3 gezeigten Ausführungsform sind die Heizplatten 60, 80 aus einem Titanblech hergestellt, das eine Stärke von ca. 1 mm aufweist.

### Bezugszeichenliste

- 10: Heizelement
- 20: Grundkörper
- 22: Kanäle
- 24: Zentralbohrung
- 26: Dichtung
- 28: Dichtung
- 40: Befestigung
- 42: Schraubenelemente
- 44: Klemmelemente
- 60: Heizplatte
- 62: Bereiche der Heizplatte
- 80: Heizplatte
- 82: Bereiche der Heizplatte
- 100: Verbindungselement

## Patentansprüche

1. Heizelement (10) für eine Filterpresse, das mit einem fluiden Heizmedium beschickbar ist und das mindestens eine sich im wesentlichen über eine Ebene erstreckende Heizplatte (60, 80) aus einem wärmeleitenden Material umfaßt, die an einem Grundkörper (20) des Heizelements (10) befestigt ist und die auf einer Oberseite des Grundkörpers (20) aufliegt,
**dadurch gekennzeichnet, daß**
die Heizplatte (60, 80) ausschließlich in einem zusammenhängenden Teilbereich an dem Grundkörper (20) befestigt ist, wobei die Fläche des zusammenhängenden Teilbereichs kleiner ist als die verbleibende Fläche der Heizplatte, und wobei die mindestens eine Heizplatte zumindest an einem Außenbereich der Ebene nicht mit dem Grundkörper verbunden ist.

2. Heizelement nach Anspruch 1, **dadurch gekennzeichnet, daß** die Ausdehnung des zusammenhängenden Teilbereichs zumindest in einer von zwei die Ebene der Heizplatte aufspannenden, senkrecht zueinander stehenden Richtungen 50% der maximalen Ausdehnung der Heizplatte (60, 80) in dieser Richtung nicht überschreitet.

3. Heizelement nach Anspruch 2, **dadurch gekennzeichnet, daß** dieser zusammenhängende Teilbereich in beiden die Ebene der Heizplatte aufspannenden, senkrecht zueinander stehenden Richtungen 50% der maximalen Ausdehnung der Heizplatte (60, 80) in jeder der Richtungen nicht überschreitet.

4. Heizelement nach einem der Ansprüche 1 bis 3, **dadurch gekennzeichnet, daß** das Heizelement (10) eine Zentralbohrung (24) aufweist, wobei die mindestens eine Heizplatte (60, 80) nur in einem um die Zentralbohrung (24) herum angeordneten Teilbereich an dem Grundkörper (20) befestigt ist.

5. Heizelement nach einem der Ansprüche 1 bis 3, **dadurch gekennzeichnet, daß** das Heizelement (10) eine Bohrung in einem Eckbereich aufweist, wobei die mindestens eine Heizplatte (60, 80) nur in einem um die Eckbohrung herum angeordneten Teilbereich an dem Grundkörper (20) befestigt ist.

6. Heizelement nach einem der Ansprüche 1 bis 3, **dadurch gekennzeichnet, daß** die mindestens eine Heizplatte (60, 80) im wesentlichen nur an einem Seitenbereich der Heizplatte (60, 80) an dem Grundkörper (20) befestigt ist.

7. Heizelement nach einem der vorhergehenden Ansprüche, **dadurch gekennzeichnet, daß** sich die mindestens eine Heizplatte (60, 80) in Richtung ihrer Ebene nur innerhalb der seitlichen Abmessungen des Grundkörpers (20) erstreckt.

8. Heizelement nach einem der Ansprüche 1 bis 6, **dadurch gekennzeichnet, daß** die mindestens eine Heizplatte (60, 80) in Richtung ihrer Ebene zumindest an einer Seite den Grundkörper (20) überragt.

9. Heizelement nach einem der vorhergehenden Ansprüche, **dadurch gekennzeichnet, daß** das Heizelement (10) zwei Heizplatten (60, 80) umfaßt.

10. Heizelement nach Anspruch 9, **dadurch gekennzeichnet, daß** mindestens ein Verbindungselement (100) vorgesehen ist, das die beiden Heizplatten (60, 80) in einer festgelegten relativen Position zueinander hält.

11. Heizelement (10) für eine Filterpresse nach einem der vorhergehenden Ansprüche mit zwei sich im wesentlichen über eine Ebene erstreckenden Heizplatten (60, 80) aus einem wärmeleitenden Material, wobei der Grundkörper (20) zwischen den Heizelementen (60, 80) angeordnet ist, wobei die Heizplatten (60, 80) mittels Distanzstücken außerhalb der seitlichen Ausdehnung des Grundkörpers (20) miteinander verbunden sind, und wobei der gesamte Grundkörper (20) zwischen den Heizplatten (60, 80) relativ zu den Heizplatten zumindest in einem Maße frei beweglich ist, daß eine unterschiedliche, thermisch bedingte Ausdehnung der Heizplatten (60, 80) einerseits und des Grundkörpers (20) andererseits möglich ist.

12. Heizelement nach einem der vorhergehenden Ansprüche, **dadurch gekennzeichnet, daß** die mindestens eine Heizplatte (60, 80) eine Dicke von maximal 2 mm aufweist.

13. Heizelement nach einem der vorhergehenden Ansprüche, **dadurch gekennzeichnet, daß** eine Dichtung zwischen der mindestens einen Heizplatte (60, 80) und dem Grundkörper (20) im äußersten Randbereich des Heizelements (10) umlaufend angeordnet ist.

14. Heizelement nach einem der vorhergehenden Ansprüche, **dadurch gekennzeichnet, daß** die mindestens eine Heizplatte (60, 80) aus einem Metall oder aus wärmeleitenden Kunststoffen oder einer Kombination hiervon besteht.

15. Heizelement nach einem der vorhergehenden Ansprüche, **dadurch gekennzeichnet, daß** der Grundkörper (20) aus einem Kunststoffmaterial besteht.

## Claims

1. Heating element (10) for a filter press which can be supplied with a fluid heating medium and which comprises at least one heating plate (60, 80) extending over a plane and made of a heat-conducting material, which is attached to a base (20) of the heating element (10) and which lies against a top of the base (20),
**characterized by** the fact that
the heating plate (60, 80) is attached to the base (20) exclusively in one continuous partial area wherein the surface of the continuous partial area is smaller than the remaining surface of the heating plate, and wherein the at least one heating plate is not joined to the base in at least one external area of the plane.

2. Heating element according to claim 1, **characterized by** the fact that the expansion of the continuous partial area at least in one of two directions which span the plane of the heating plate and are perpendicular to each other does not exceed 50% of the maximal expansion of the heating plate (60, 80) in this direction.

3. Heating element according to claim 2, **characterized by** the fact that the continuous area in both directions which span the plane of the heating plate and are perpendicular to each other, does not exceed 50% of the maximal expansion of the heating plate (60, 80) in each of the directions.

4. Heating element according to one of the claims 1 to 3, **characterized by** the fact that the heating element (10) has a central borehole (24) wherein the at least one heating plate (60, 80) is attached to the base (20) only in one partial area located around the central borehole (24).

5. Heating element according to one of the claims 1 through 3, **characterized by** the fact that the heating element (10) has a borehole in a corner area wherein the at least one heating plate (60, 80) is fastened to the base (20) in only one partial area at the corner borehole.

6. Heating element according to one of the claims 1 through 3 **characterized by** the fact that at least one heating plate (60, 80) is attached to the base (20) essentially only on one edge area of the heating plate (60, 80).

7. Heating element according to one of the previous claims, **characterized by** the fact that the at least one heating plate (60, 80) extends in the direction of its plane only within the lateral dimensions of the base (20).

8. Heating element according to one of the claims 1 through 6, **characterized by** the fact that at least one heating plate (60, 80) extends beyond the base (20) in the direction of its plane at least on one side.

9. Heating element according to one of the previous claims, **characterized by** the fact that the heating element (10) comprises two heating plates (60, 80).

10. Heating element according to claim 9, **characterized by** the fact that at least one connector (100) is provided to hold the two heating plates (60, 80) in a fixed position relative to each other.

11. Heating element (10) for a filter press according to one of the previous claims, comprising two heating plates (60, 80) of a heat-conducting material and extending essentially over one plane, wherein the base (20) is positioned between the heating plates (60, 80),
wherein the heating plates (60, 80) are connected to each other by means of spacers external to the lateral expansion of the base (20), and wherein the entire base (20) can move freely in between the heating plates (60, 80) at least in one degree relative to the heating plates (60, 80) such that a different, thermally-determined expansion of the heating plates (60, 80) on the one hand and of the base (20) on the other is possible.

12. Heating element according to one of the previous claims, **characterized by** the fact that the heating plate (60, 80) has a thickness of at most 2 mm.

13. Heating element according to one of the previous claims, **characterized by** the fact that a seal between the at least one heating plate (60, 80) and the base (20) is circumferentially located at the most exterior edge area of the heating element (10).

14. Heating element according to one of the previous claims **characterized by** the fact that the at least one heating plate (60, 80) is made of a metal or a heat-conducting synthetic or a combination of the two.

15. Heating element according to one of the previous claims **characterized by** the fact that the base (20) is made of a synthetic material.

## Revendications

1. Elément chauffant (10) pour un filtre-presse, susceptible d'être alimenté avec un milieu chauffant fluide et comprenant au moins une plaque chauffante (60, 80) s'étendant sensiblement sur un plan, formées d'un matériau conducteur de la chaleur, fixée à un corps de base (20) de l'élément chauffant (10) et reposant sur une face supérieure du corps de base (20),
**caractérisé en ce que**
la plaque chauffante (60, 80) est fixée, exclusivement dans une zone partielle connexe, sur le corps de base (20), la surface de la zone partielle connexe étant plus petite que la surface restante de la plaque chauffante, et la au moins une plaque chauffante, au moins sur une zone extérieure du plan, n'étant pas reliée au corps de base.

2. Elément chauffant selon la revendication 1,
**caractérisé en ce que** l'étendue de la zone partielle connexe, au moins dans l'une de deux directions, couvrant le plan de la plaque chauffante, perpendiculaires l'une à l'autre, ne dépasse pas 50 % de l'étendue maximale de la plaque chauffante (60, 80) dans cette direction.

3. Elément chauffant selon la revendication 2,
**caractérisé en ce que**, dans les deux directions, couvrant le plan de la plaque chauffante, perpendiculaires l'une à l'autre, cette zone partielle connexe ne dépasse pas 50 % de l'étendue maximale de la plaque chauffante (60, 80) dans chacune des directions.

4. Elément chauffant selon l'une des revendications 1 à 3, **caractérisé en ce que** l'élément chauffant (10) présente un perçage central (24), la au moins une plaque chauffante (60, 80) n'étant fixée sur le corps de base (20) que dans une zone partielle disposée autour du perçage central (24).

5. Elément chauffant selon l'une des revendications 1 à 3, **caractérisé en ce que** l'élément chauffant (10) présente un perçage dans une zone d'angle, la au moins une plaque chauffante (60, 80) n'étant fixée sur le corps de base (20) que dans une zone partielle disposée autour du perçage d'angle.

6. Elément chauffant selon l'une des revendications 1 à 3, **caractérisé en ce que** la au moins une plaque chauffante (60, 80) n'est fixée sur le corps de base (20) essentiellement que sur une zone latérale de la plaque chauffante (60, 80).

7. Elément chauffant selon l'une des revendications précédentes, **caractérisé en ce que** la au moins une plaque chauffante (60, 80) s'étend dans la direction de son plan, seulement à l'intérieur des dimensions latérales du corps de base (20).

8. Elément chauffant selon l'une des revendications 1 à 6, **caractérisé en ce que** la au moins une plaque chauffante (60, 80) dépasse, en direction de son plan, au moins sur un côté, le corps de base (20).

9. Elément chauffant selon l'une des revendications précédentes, **caractérisé en ce que** l'élément chauffant (10) comprend deux plaques chauffantes (60, 80).

10. Elément chauffant selon la revendication 9,
**caractérisé en ce qu'**est prévu au moins un élément de liaison (100), maintenant les deux plaques chauffantes (60, 80) en une position relative fixée.

11. Elément chauffant (10) pour un filtre-presse selon l'une des revendications précédentes, avec deux plaques chauffantes (60, 80) s'étendant sensiblement sur un plan, formées d'un matériau conducteur de la chaleur, le corps de base (20) étant disposé entre les éléments chauffants (60, 80), les plaques chauffantes (60, 80) étant reliées ensemble, hors de l'étendue latérale du corps de base (20), à l'aide de pièces d'espacement, et l'ensemble du corps de base (20) étant mobile librement, entre les plaques chauffantes (60, 80), par rapport aux plaque chauffantes, au moins à un degré tel qu'une dilatation d'origine thermique, de valeur différente, des plaques chauffantes (60, 80), d'une part, et du corps de base (20), d'autre part, soit possible.

12. Elément chauffant selon l'une des revendications précédentes, **caractérisé en ce que** la au moins une plaque chauffante (60, 80) présente une épaisseur maximale de 2 mm.

13. Elément chauffant selon l'une des revendications précédentes, **caractérisé en ce qu'**un joint d'étanchéité est prévu, entre la au moins une plaque chauffante (60, 80) et le corps de base (20), en pourtour dans la zone la plus extérieure de l'élément chauffant (10).

14. Elément chauffant selon l'une des revendications précédentes, **caractérisé en ce que** la au moins une plaque chauffante (60, 80) est composée de métal ou de matières synthétiques conductrices de la chaleur, ou d'une combinaison de ceux-ci.

15. Elément chauffant selon l'une des revendications précédentes, **caractérisé en ce que** le corps de base (20) est composé d'un matériau synthétique.
